# EUROPEAN PATENT SPECIFICATION

(11) **EP 3 261 433 B1**
(45) Date of publication and mention of the grant of the patent: **08.04.2020**
(21) Application number: 16724481.3
(22) Date of filing: 22.02.2016
(51) Int. Cl.: A01M 1/08, A01M 1/02, A01M 1/10, A01M 1/04, A01M 1/06

(54) **DEVICE FOR MONITORING AND CATCHING INSECTS OF THE CULICIDAE POPULATION**
VORRICHTUNG ZUM FANGEN UND ZUR KONTROLLE VON INSEKTEN AUS DER FAMILIE DER CULICIDAE
DISPOSITIF POUR CAPTURER ET SURVEILLER DES INSECTES DE LA POPULATION DES CULICIDAE

(30) Priority: 25.02.2015 IT UB20150450
(43) Date of publication of application: 03.01.2018
(73) Proprietor: Magnani, Maurizio, 40026 Imola (BO) (IT); C.A.A. "Giorgio Nicoli" S.r.l., 40014 Crevalcore (BO) (IT); Zamboni, Stefano, 47122 Forlí (IT); Gentile, Gregorio, Bologna (BO) (IT)
(72) Inventor: MAGNANI, Maurizio, 40026 Imola (BO) (IT); COLONNA, Roberta, Predappio (FC) (IT); ZAMBONI, Stefano, Forli' (FC) (IT); GENTILE, Gregorio, Bologna (BO) (IT)
(74) Representative: Tiburzi, Andrea
(86) International application number: PCT/IT2016/000045
(87) International publication number: WO 2016/135765

(56) References cited:
- EP-A1- 1 745 697
- WO-A1-98/11774
- WO-A1-2011/120578
- US-A1- 2010 319 240
- US-A1- 2014 137 462

## Description

This invention relates to a device for monitoring and catching insects from the culicidae population.

In greater detail, the invention relates to a device of the type called, studied and made more specifically for catching insects from the family Culicidae, that is the *Aedes albopictus,* commonly known as the tiger mosquito, but it may also be used for the species *Culex pipiens, Anopheles spp, Aedes koreicus, Aedes japonicus, Aedes aegypti* and for the species which have the host chemical seeking mechanisms and/or the oviposition site in common with the *Aedes albopictus.*

The description below relates to the specimens from the *Aedes albopictus* species, but it is quite apparent how the same should not be considered limited to this species.
As is well known, tiger mosquitos are currently widespread also in urban centres, especially in the early morning hours and in the late afternoon, disturbing and biting the population and causing health problems, given that these mosquitos are capable of transmitting pathogens which may cause illness - even serious illness - in humans.

Moreover, these mosquitos require water to complete their development cycle, more specifically they colonise standing water such as water traps for rainwater runoff and urban and residential street furniture which accidentally collects rainwater, such as e.g. flowerpot saucers, drums and the like.

The eggs laid on the vertical walls of the containers hatch in contact with the water, thus freeing the larvae which then give rise to the adult individuals in just a few days.

After mating, the females are capable of laying the eggs after having the "blood meal" which gives the mosquito the protein substances required to mature the eggs.

The meeting between the male individual and female individual is favoured by the sound generated by the beating wings of the female. This signal attracts the males which, with the females, form a mating swarm where different specimens of males and females fly and mate.

There are currently different systems for containing the problem of mosquito proliferation.

Modern control systems both within the public and private scope are essentially based on larvicide control with the removal of the outbreaks and the application of larvicide products in the standing water that cannot be removed.

Nevertheless, although this method is effective, it is insufficient because it is not adequately widespread and extensive throughout the urban territory.

Furthermore, devices, monitoring and catching traps are used in Culicidae control, these devices serving to determine the presence/absence and infestation level of a specific insect in an area.

These devices are designed to collect important information, also for improving the control timeframes and strategies underway, by measuring and identifying the suitable time for any abatement treatments when the presence reaches the tolerability limitations of the population.

In addition to this use, which targets specialised entomologies and/or technicians, monitoring and catching traps may also play a complementary role to the larvicide treatments in reducing the mosquito population when they are used within the private realm, such as for example gardens.

There are also attractant traps currently on the market which may provide valid assistance in containing adult individuals when they are used in combination with larvicide products.

The object of these domestic attractant traps is to catch the female mosquitos alone which, after mating with the male, are in search of the host on which to have the blood meal required to provide the proteins which are necessary for maturing the eggs.

An example of this type of attractant trap is represented by European Patent Application EP 1745697.

However, these existing attractant traps are not designed to also catch male individuals and female individuals in other stages of their life.

The relevant prior art includes also the patent applications WO 98/11774 A1, EP 1745697 A1, US 2014/137462 A1, WO 2011/120578 A1 and US 2010/319240 A1.

In light of the above, it is thus the object of this invention to make an attractant trap which not only can catch the female tiger mosquitos in search of the blood meal, but also the ones in search of a suitable site for laying the eggs, and the females in search of the male for mating and also the males of the family.

It is a further object of this invention to make an attractant trap which is also effective for other species in the family Culicidae, such as *Culex pipiens, Anopheles spp, Aedes koreicus, Aedes japonicus, Aedes aegypti.*

Thus, a specific object of this invention is a device for monitoring and catching insects from the culicidae population, comprising: a first container provided with a first plurality of elements for attracting the insects; at least a second container, positioned inside the first container, and resting on it by means of a plurality of tie rods, comprising an open upper base and a lower base, the second container being provided with a second plurality of elements for attracting the insects; at least one device for generating an air flow, which is positioned at the lower base of the second container so as to suck in the insects close to the device, from the outside towards the inside of the second container through the open upper base; and at least one perforated bag, positioned at the open upper base, which extends to the device for generating an air flow, for monitoring and catching the insects sucked inside the device.

Further according to the invention, the first plurality of attractant elements comprises: a first olfactory attractant for attracting the female insects ready to oviposit; a first visual attractant for attracting the male and female insects; and the second plurality of attractant elements comprises a second olfactory attractant for attracting the females ready to have a blood meal; and a sound attractant for attracting the males ready for mating.

Preferably according to the invention, the device comprises a further olfactory attractant for attracting the insects belonging to the species *Culex pipiens, Anopheles spp, Aedes koreicus, Aedes japonicus, Aedes aegypti.*

Moreover according to the invention, the first container has a lateral surface, which is preferably cylindrical in shape, on which a plurality of through holes is made for the electrical, liquid and/or gaseous supply of the device, an open upper base on which a lid is positioned, made of a breathable white fabric and in which a central hole is made, and a closed lower base.

Further according to the invention, the first visual attractant consists of the colour black of the lateral surface of the first container.

Preferably according to the invention, the further olfactory attractant is a device for dispensing gaseous carbon dioxide, which introduces the carbon dioxide into the first container through at least one hole of the plurality of through holes.

Moreover according to the invention, the first olfactory attractant is a solution comprising water and an organic compound of natural origin; the lower base of the first container contains the solution; and the solution can be introduced into the first container through one of the holes of the plurality of through holes.

Further according to the invention, the second container has a lateral surface, which is preferably cylindrical in shape, on which a housing is obtained; the device further comprises a release system in which the second chemical olfactory attractant is absorbed, the release system being positioned in the housing; and the second chemical olfactory attractant is a compound of substances which simulate the group of chemical substances given off in human skin perspiration and breathing.

Preferably according to the invention, a housing for the sound attractant is obtained on the lateral surface of the second container; and the sound attractant is an electronic device which reproduces the sound generated by the beating wings of the females ready to mate and is electrically powered by means of a cable passing through at least one hole of the plurality of through holes.

Moreover according to the invention, a black external collector element for conveying the insects inside the device is positioned on the open upper base of the second container, the external collector element passing through the central hole of the lid.

Further according to the invention, the at least one perforated bag comprises a first part, having a cylindrical shape, accommodated inside the second container, which first part extends from the open upper base to the lower base of the second container, and a second part, having a truncated cone shape, accommodated inside the first part and coupled to the first part at the upper base of the second container; and the external collector element secures the first and second part to the open upper base of the second container.

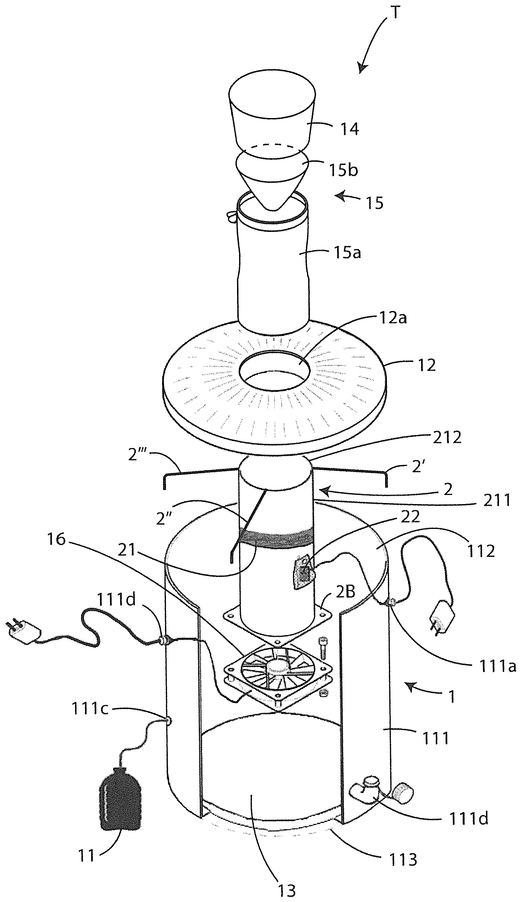

Preferably according to the invention, the device for generating an air flow is a fan powered through an electric cable passing through at least one hole of the plurality of through holes. This invention will now be described, by way of example and without limiting the scope of it, according to its preferred embodiments, with reference to the accompanying drawing which shows an exploded view of a device for monitoring and catching insects from the culicidae population, more specifically tiger mosquitos, the object of the invention.

In reference to the accompanying drawing, the device for monitoring and catching insects from the culicidae population, more specifically tiger mosquitos, the object of the invention is depicted by an attractant trap T comprising a plurality of attractant elements of the visual, olfactory and sound type capable of attracting and trapping inside it all insects belonging to the family Culicidae, more specifically of the species *Aedes albopictus.*

These insects may be divided into the following groups: male individuals, female individuals ready for mating, female individuals which require the blood meal and female individuals about to oviposit.

More specifically, the attractant trap T comprises a first container 1, which is cylindrical in shape, capable of accommodating all the other construction elements of the attractant trap T.

The first cylindrical container 1 has a lateral surface 111, an open upper base 112 and a closed lower base 113 to allow the attractant trap T to be rested on a surface.

More specifically, the lateral surface 111 depicts a first attractant element of the visual type, more specifically coloured, because it has a black pigment.

The black is characterized by an increased attractant capacity both towards females and males of *Aedes albopictus* because in the South-East Asian forests where the tiger mosquito originates, it seeks cavities of trees and natural recesses to lay eggs and as a shelter, and therefore the colour black simulates a natural cranny.

Moreover, a plurality of through holes 111a, 111b, 111c, 111d for the electrical and liquid supply of the attractant trap T are made on the lateral surface 111.

A lateral surface provided with one through hole alone may also be used.

More specifically, the through holes 111a and 111b serve as a passageway for electrical supply cables for elements contained inside the first cylindrical container 1 which will be described in detail below; the through hole 111c is normally closed by a cap. In a specific embodiment, it serves as a passageway for the supply of a further olfactory attractant which will be described in detail below; the through hole 111d serves as passageway for the supply of a solution which will be described in detail below.

With regard to the further olfactory attractant present in a specific embodiment alone, it is depicted by a device 11 for dispensing gaseous carbon dioxide, which introduces the carbon dioxide into the first cylindrical container 1.

The gaseous carbon dioxide does not have particularly effective attractants towards the species *Aedes albopictus* but it is one of the chemical signals which is most followed in the search for the host by other mosquito species, such as the *Culex pipiens.*

The open upper base 112 is closed by a lid 12, which is made of a breathable white fabric.

A central hole 12a is made in the lid 12, designed to introduce further elements of the attractant trap T, as will be described in detail below.

The lower base 113 is an impermeable container and accommodates a solution 13, up to the through hole 111d, comprising water and an additive chemical substance, which serves as first chemical olfactory attractant.

More specifically, the additive chemical substance is of natural organic origin and may be selected from different substances, all characterised - at a predetermined concentration - by a strong olfactory attractant capacity towards the female mosquitos which have already had the blood meal and, once the eggs have matured, are in search of a site for ovipositing.

Substances having this important feature are for example plant macerals of leaves and/or grass, such as the oak bark, or *Quercus Spp,* maceral and the *Bacillus thuringiensis* variety *israelensis-based* solution.

The *Bacillus thuringiensis* variety *israelensis* is a bacteria known to be a larvicide for mosquito larvae but it also has a strong olfactory attractant capacity towards female mosquitos in search of a location for ovipositing.

Therefore, the additive chemical substance simulates the presence of a suitable place for laying the eggs and is introduced into the first cylindrical container 1 through the through hole 111d which can be capped using a closing element.

The attractant trap T further comprises a second container 2, which is cylindrical in shape, which is concentric compared to the first cylindrical container 1 and has a smaller diameter compared to the diameter of the first cylindrical container 1, which is provided with a second chemical olfactory attractant and a sound attractant.

The second container 2 is provided with a plurality of tie rods, more specifically a first 2', a second 2" and a third 2"' tie rod by means of which the second container 2 is attached to the first container 1.

More specifically, the second cylindrical container 2 has a lateral surface 211, an open upper base 212 for accommodating elements which will be described in detail below, and a lower base 213.

A housing is made on the lateral surface 211, housing which occupies the whole lateral surface 211 or only part of it, designed to accommodate a release system in which the second chemical olfactory attractant 21 is absorbed.

More specifically, the release system is a slow-release absorbent material which releases scented substances contained in it, following the passage of an air current, as will be described in detail below.

The second chemical olfactory attractant 21 is composed of substances which simulate the group of chemical substances given off by human skin perspiration and breathing, such as butyric acid and/or propionic acid and/or formic acid and/or lactic acid and/or caproic acid, and is used to attract mainly female tiger mosquitos which are searching for the host on which to have the blood meal.

A housing for a sound attractant 22 is also obtained on the lateral surface 211.

The sound attractant 22 is an electronic device which reproduces the typical sound generated by the beating wings of the females ready to mate and is used to attract the males.

The electronic device is opportunely calibrated to emit a sound characterised by a frequency and volume capable of replicating the beating wings specifically of the female tiger mosquito.

The presence of males trapped inside the first cylindrical container 1 favours the release of a fourth chemical additive represented by the chemical substances given off naturally by the males and which therefore attract the females ready for mating.

An external collector element 14, opportunely shaped to adjust the flow of suction, which passes through the central hole 12a of the lid 12, is positioned at the upper base 212 of the second cylindrical container 2.

The external collector element 14 is black, designed to convey the insects inside the attractant trap T and to support a perforated tulle bag 15.

The perforated tulle bag 15 comprises a first part 15a and a second part 15b.

The first part 15a, having a cylindrical shape, adheres to the inner surface of the inner cylinder 2, and a second part 15b, having a truncated cone shape, is accommodated inside the first part 15a.

The external collector element 14 is introduced in the upper base 212 of the second cylindrical container 2 so as to stop the bag 15 inside the second cylindrical container 2 and to partially come out of the central hole 12a of the lid 12.

A suction fan 16 which generates an air vortex which sucks the mosquitos into the attractant trap T is positioned at the lower base 213 of the second cylindrical container 2. The suction fan 16 is electrically powered through a cable passing through the through hole 111b made on the lateral surface 111 of the external cylinder 1.

The operation of the attractant trap T described above is as follows.

When a user intends using the attractant trap T to attract mosquitos, he/she initially electrically powers the attractant trap T by connecting it to the power grid using the cables of the suction fan 16 and of the sound attractant 22.

The suction fan 16 generates a depression and therefore causes a suction of air through the external collector element 14.

The sucked in external air is directed towards the lower base 113 of the first cylindrical container 1 and from here, striking against the inner lateral surface of the lower base 1, flows upwards to be output through the lid 12.

In this path, the air transfers the volatile substances contained in the solution 13 and in the second chemical olfactory attractant 21 to the outside, and comes into contact with the carbon dioxide which, in a specific embodiment, flows out of the device 11 for dispensing gaseous carbon dioxide, so as to diffuse these attractant substances outside the attractant trap T.

These substances diffused externally, combined with the call of the sound emitted by the sound attractant 22 and combined with the call of the visual attractant 111, contribute to attracting the mosquitos which, as soon as they move within the vicinity of the external collector element 14, are sucked in by the air vortex generated by the fan 16 and end up in the second part 15b of the bag 15 to remain trapped in it.

Moreover, the males trapped in the attractant trap T produce natural chemical substances which serve as an attractant for the females ready for mating.

As is apparent from the description above, the attractant trap T comprises a plurality of chemical, sound and visual attractants which contribute to attracting and then trapping mainly all the individuals of the species *Aedes albopictus* and secondly the individuals of the species *Culex pipiens, Anopheles spp, Aedes koreicus, Aedes japonicus, Aedes aegypti.*

This invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. A device (T) for monitoring and catching insects from the culicidae population, comprising:
a first container (1) provided with a first plurality of elements (13, 111) for attracting the insects;
at least one second container (2), positioned inside said first container (1), and resting on it by means of a plurality of tie rods (2', 2", 2"'), comprising an open upper base (212) and a lower base (213), said second container (2) being provided with a second plurality of elements (21, 22) for attracting the insects;
at least one device (16) for generating an air flow, which is positioned at the lower base (213) of said second container (2) so as to suck in the insects close to said device (T), from the outside towards the inside of said second container (2) through said open upper base (212);
at least one perforated bag (15), arranged in correspondence of said open upper base (212), which extends to said device (16) for generating an air flow, for monitoring and catching the insects sucked inside the device (T), said device (T) being **characterized**
**in that** said first container (1) has a cylindrical shape having a lateral surface (111), an open upper base (112) and a closed lower base (113), and a plurality of through holes (111a, 111b, 111c, 111d) for the electrical and liquid supply are made on said lateral surface (111);
**in that** it comprises a further olfactory attractant (11) for attracting the insects belonging to the species *Culex pipiens, Anopheles spp, Aedes koreicus, Aedes japonicus, Aedes aegypti;*
**in that** an element of said first plurality of elements (13, 111) is a first olfactory attractant (13), which is a solution (13) comprising water and an organic compound of natural origin;
**in that** said closed lower base (113) of said first container (1) contains said solution (13);
**in that** said solution (13) can be introduced into said first container (1) through one of said holes (111d) of said plurality of through holes (111a, 111b, 111c, 111d);
**in that** said second container (2) has a lateral surface (211), which is preferably cylindrical in shape, on which a housing is obtained;
**in that** an element of second plurality of elements (21, 22) is a second chemical olfactory attractant (21) and said device (T) further comprises a release system in which said second chemical olfactory attractant (21) is absorbed, the release system being positioned in said housing;
**in that** said second chemical olfactory attractant (21) is a compound of substances which simulate the group of chemical substances given off in human skin perspiration and breathing;
**in that** a housing for a sound attractant (22) is obtained on the lateral surface (211) of said second container (2); and
**in that** an element of said second plurality of elements (21, 22) is a sound attractant (22), which is an electronic device which reproduces the sound generated by the beating wings of the females ready to mate and is electrically powered by means of a cable passing through at least one hole (111a) of said plurality of through holes (111a, 111b, 111c, 111d).

2. The device (T) according to the preceding claim, **characterized in that** said first plurality of attractant elements (13, 111) comprises:
- a first olfactory attractant (13) for attracting the female insects ready to oviposit;
- a first visual attractant (111) for attracting the male and female insects; and
**in that** said second plurality of attractant elements (21, 22) comprises:
- a second olfactory attractant (21) for attracting the females ready to have a blood meal; and
- a sound attractant (22) for attracting the males ready for mating.

3. The device (T) according to any one of the preceding claims, **characterized in that** said first container (1) has the lateral surface (111), on which the plurality of through holes (111a, 111b, 111c, 111d) is made for the electrical, liquid and gaseous supply of the device (T), the open upper base (112) on which a lid (12) is positioned, made of a breathable white fabric and in which a central hole (12a) is made, and the closed lower base (113).

4. The device (T) according to any one of the preceding claims 2 or 3, **characterized in that** said first visual attractant consists of the colour black of the lateral surface (111) of said first container (1).

5. The device (T) according to any of the preceding claims, **characterized in that** said further olfactory attractant is a device (11) for dispensing gaseous carbon dioxide, which introduces said carbon dioxide into the first container (1) through at least one hole (111c) of said plurality of through holes (111a, 111b, 111c, 111d).

6. The device (T) according to any one of claims 3 to 5, **characterized in that** a black external collector element (14) for conveying the insects inside the device (T) is positioned on said open upper base (212) of said second container (2), the external collector element (14) passing through said central hole (12a) of said lid (12).

7. The device (T) according to the preceding claim, **characterized**
**in that** said at least one perforated bag (15) comprises:
- a first part (15a), having a cylindrical shape, accommodated inside said second container (2), which first part (15a) extends from said open upper base (212) to said lower base (213) of said second container (2), and
- a second part (15b), having a truncated cone shape, accommodated inside said first part (15a) and coupled to said first part (15a) at said upper base (212) of said second container (2); and
**in that** said external collector element (14) secures said first (15a) and second (15b) part to said open upper base of said second container (2).

8. The device (T) according to any one of the preceding claims, **characterized in that** said device for generating an air flow (16) is a fan powered through an electrical cable passing through at least one hole (111c) of said plurality of through holes (111a, 111b, 111c, 111d).

## Patentansprüche

1. Vorrichtung (T) zum Kontrollieren und Einfangen von Insekten aus der Culicidae-Population, umfassend:
einen ersten Behälter (1), der mit einer ersten Vielzahl von Elementen (13, 111) zum Anlocken der Insekten versehen ist;
mindestens einen zweiten Behälter (2), der im Inneren des ersten Behälters (1) positioniert ist und darauf mittels einer Vielzahl von Spannstangen (2', 2", 2"') ruht, umfassend eine offene obere Grundfläche (212) und eine untere Grundfläche (213), wobei der zweite Behälter (2) mit einer zweiten Vielzahl von Elementen (21, 22) zum Anlocken der Insekten versehen ist;
mindestens eine Vorrichtung (16) zum Erzeugen eines Luftstroms, die an der unteren Grundfläche (213) des zweiten Behälters (2) positioniert ist, um die Insekten nahe der Vorrichtung (T) durch die offene obere Grundfläche (212) von außen ins Innere des zweiten Behälters (2) zu saugen;
mindestens einen perforierten Beutel (15), angeordnet in Verbindung mit der offenen oberen Grundfläche (212), der sich zu der Vorrichtung (16) zum Erzeugen eines Luftstroms erstreckt, zum Kontrollieren und Einfangen der in die Vorrichtung (T) gesogenen Insekten, wobei die Vorrichtung (T) **dadurch gekennzeichnet ist,**
**dass** der erste Behälter (1) eine zylindrische Form aufweist, aufweisend eine seitliche Oberfläche (111), eine offene obere Grundfläche (112) und eine geschlossene untere Grundfläche (113), und auf der seitlichen Oberfläche (111) eine Vielzahl von Durchgangslöchern (111a, 111b, 111c, 111d) zur Strom- und Flüssigkeitsversorgung hergestellt ist;
**dass** sie ein weiteres Duftlockmittel (11) zum Anlocken der Insekten, die zu der Spezies *Culex pipiens, Anopheles spp, Aedes koreicus, Aedes japonicus, Aeses aegypti* gehören, umfasst;
**dass** ein Element der ersten Vielzahl von Elementen (13, 111) ein erstes Duftlockmittel (13) ist, das eine Wasser und eine organische Verbindung natürlichen Ursprungs umfassende Lösung (13) ist;
**dass** die geschlossene untere Grundfläche (113) des ersten Behälters (1) die Lösung (13) enthält;
**dass** die Lösung (13) durch eines der Löcher (111d) der Vielzahl von Durchgangslöchern (111a, 111b, 111c, 111d) in den ersten Behälter (1) eingeleitet werden kann;
**dass** der zweite Behälter (2) eine seitliche Oberfläche (211) aufweist, die vorzugweise zylindrisch in der Form ist, auf der ein Gehäuse erhalten ist;
**dass** ein Element der zweiten Vielzahl von Elementen (21, 22) ein zweites chemisches Duftlockmittel (21) ist und die Vorrichtung (T) weiter ein Freisetzungssystem umfasst, in dem das zweite chemische Duftlockmittel (21) absorbiert ist, wobei das Freisetzungssystem in dem Gehäuse positioniert ist;
**dass** das zweite chemische Duftlockmittel (21) eine Verbindung von Substanzen ist, die die Gruppe von chemischen Substanzen simulieren, die im Schweiß der menschlichen Haut und im Atem abgegeben werden;
**dass** ein Gehäuse für ein Klanglockmittel (22) auf der seitlichen Oberfläche (211) des zweiten Behälters (2) erhalten ist; und
**dass** ein Element der zweiten Vielzahl von Elementen (21, 22) ein Klanglockmittel (22) ist, das eine elektronische Vorrichtung ist, die den von den schlagenden Flügeln der paarungsbereiten Weibchen erzeugten Klang reproduziert und mittels eines Kabels, das durch mindestens ein Loch (111a) der Vielzahl von Durchgangslöchern (111a, 111b, 111c, 111d) verläuft, mit Strom versorgt wird.

2. Vorrichtung (T) nach dem vorstehenden Anspruch, **dadurch gekennzeichnet, dass** die erste Anzahl von Lockmittelelementen (13, 111) Folgendes umfasst:
- ein erstes Duftlockmittel (13) zum Anlocken der zur Eiablage bereiten weiblichen Insekten;
- ein erstes visuelles Lockmittel (111) zum Anlocken der männlichen und weiblichen Insekten; und
dass die zweite Vielzahl von Lockmittelelementen (21, 22) Folgendes umfasst:
- ein zweites Duftlockmittel (21) zum Anlocken der für eine Blutmahlzeit bereiten Weibchens; und
- ein Klanglockmittel (22) zum Anlocken der paarungsbereiten Männchen.

3. Vorrichtung (T) nach einem der vorstehenden Ansprüche, **dadurch gekennzeichnet, dass** der erste Behälter (1) Folgendes aufweist:
die seitliche Oberfläche (111), auf der die Vielzahl von Durchgangslöchern (111a, 111b, 111c, 111d) für die Strom-, Flüssigkeits- und Gasversorgung der Vorrichtung (T) hergestellt ist,
die offene obere Grundfläche (112), auf der ein aus einem atmungsaktiven weißen Stoff hergestellter Deckel (12), in dem ein zentrales Loch (12a) hergestellt ist, positioniert ist, und
die geschlossene untere Grundfläche (113).

4. Vorrichtung (T) nach einem der vorstehenden Ansprüche 2 oder 3, **dadurch gekennzeichnet, dass** das erste visuelle Lockmittel aus der Farbe Schwarz der seitlichen Oberfläche (111) des ersten Behälters (1) besteht.

5. Vorrichtung (T) nach einem der vorstehenden Ansprüche, **dadurch gekennzeichnet, dass** das weitere Duftlockmittel eine Vorrichtung (11) zum Abgeben von gasförmigem Kohlendioxid ist, die das Kohlendioxid durch mindestens ein Loch (111c) der Vielzahl von Durchgangslöchern (111a, 111b, 111c, 111d) in den ersten Behälter (1) einleitet.

6. Vorrichtung (T) nach einem der Ansprüche 3 bis 5, **dadurch gekennzeichnet, dass** ein schwarzes äußeres Auffangelement (14) zum Transportieren der Insekten ins Innere der Vorrichtung (T) auf der offenen oberen Grundfläche (212) des zweiten Behälters (2) positioniert ist, wobei das äußere Auffangelement (14) durch das zentrale Loch (12a) des Deckels (12) verläuft.

7. Vorrichtung (T) nach dem vorstehenden Anspruch, **dadurch gekennzeichnet,**
**dass** mindestens ein perforierter Beutel (15) Folgendes umfasst:
- einen ersten Teil (15a), der eine zylindrische Form aufweist, untergebracht im Inneren des zweiten Behälters (2), wobei sich der erste Teil (15a) von der offenen oberen Grundfläche (212) zu der unteren Grundfläche (213) des zweiten Behälters (2) erstreckt, und
- einen zweiten Teil (15b), der eine Kegelstumpfform aufweist, untergebracht im Inneren des ersten Teils (15a) und an den ersten Teil (15a) der oberen Grundfläche (212) des zweiten Behälters (2) gekoppelt; und
**dass** das äußere Auffangelement (14) den ersten (15a) und zweiten (15b) Teil an der offenen oberen Grundfläche des zweiten Behälters (2) sichert.

8. Vorrichtung (T) nach dem vorstehenden Anspruch, **dadurch gekennzeichnet, dass** die Vorrichtung zum Erzeugen eines Luftstromes (16) ein Ventilator ist, der durch ein elektrisches Kabel, das durch mindestens ein Loch (111c) der Vielzahl von Durchgangslöchern (111a, 111b, 111c, 111d) verläuft, mit Strom versorgt wird.

## Revendications

1. Dispositif (T) pour surveiller et capturer des insectes de la population des culicidés comprenant :
un premier récipient (1) pourvu d'une première pluralité d'éléments (13, 111) pour attirer les insectes ;
au moins un second récipient (2), positionné à l'intérieur dudit premier récipient (1), et reposant sur ce dernier au moyen d'une pluralité de tiges de raccordement (2', 2", 2"'), comprenant une base supérieure ouverte (212) et une base inférieure (213), ledit second récipient (2) étant pourvu d'une seconde pluralité d'éléments (21, 22) pour attirer les insectes ;
au moins un dispositif (16) pour générer un flux d'air, qui est positionné au niveau de la base inférieure (213) dudit second récipient (2) de sorte à aspirer les insectes proches dudit dispositif (T), de l'extérieur vers l'intérieur dudit second récipient (2) à travers ladite base supérieure ouverte (212) ;
au moins un sac perforé (15), agencé en correspondance de ladite base supérieure ouverte (212), qui s'étend vers ledit dispositif (16) pour générer un flux d'air, pour surveiller et attraper les insectes aspirés à l'intérieur du dispositif (T), ledit dispositif (T) étant **caractérisé**
**en ce que** ledit premier récipient (1) présente une forme cylindrique ayant une surface latérale (111), une base supérieure ouverte (112) et une base inférieure fermée (113) et une pluralité de trous traversants (111a, 111b, 111c, 111d) pour l'alimentation électrique et liquide sont ménagés sur ladite surface latérale (111) ;
**en ce qu'**il comprend un appât olfactif supplémentaire (11) pour attirer les insectes appartenant aux espèces *Culex pipiens, Anopheles spp, Aedes koreicus, Aedes japonicus, Aedes aegypti ;*
**en ce qu'**un élément de ladite première pluralité d'éléments (13, 111) est un premier appât olfactif (13), qui est une solution (13) comprenant de l'eau et un composé organique d'origine naturelle ;
**en ce que** ladite base inférieure fermée (113) dudit premier récipient (1) contient ladite solution (13) ;
**en ce que** ladite solution (13) peut être introduite dans ledit premier récipient (1) par l'un desdits trous (111d) de ladite pluralité de trous traversants (111a, 111b, 111c, 111d) ;
**en ce que** ledit second récipient (2) comporte une surface latérale (211), dont la forme est, de préférence, cylindrique, sur laquelle un boîtier est obtenu ;
**en ce qu'**un élément de la seconde pluralité d'éléments (21, 22) est un second appât olfactif chimique (21) et ledit dispositif (T) comprend en outre un système de libération dans lequel ledit second appât olfactif chimique (21) est absorbé, le système de libération étant positionné dans ledit boîtier ;
**en ce que** ledit second appât olfactif chimique (21) est un composé de substances qui simulent le groupe de substances chimiques émises lors de la transpiration cutanée et de la respiration d'être humain ;
**en ce qu'**un boîtier pour un appât sonore (22) est obtenu sur la surface latérale (211) dudit second récipient (2) ; et
**en ce qu'**un élément de ladite seconde pluralité d'éléments (21, 22) est un appât sonore (22), qui est un dispositif électronique qui reproduit le son généré par le battement des ailes des femelles prêtes à s'accoupler et est alimenté électriquement au moyen d'un câble passant à travers au moins un trou (111a) de ladite pluralité de trous traversants (111a, 111b, 111c, 111d).

2. Dispositif (T) selon la revendication précédente, **caractérisé en ce que** ladite première pluralité d'éléments attractifs (13, 111) comprend :
- un premier appât olfactif (13) pour attirer les insectes femelles prêtes à pondre ;
- un premier appât visuel (111) pour attirer les insectes mâles et femelles ; et
**en ce que** ladite seconde pluralité d'éléments attractifs (21, 22) comprend :
- un second appât olfactif (21) pour attirer les femelles prêtes à avoir un repas de sang ; et
- un appât sonore (22) pour attirer les mâles prêts à s'accoupler.

3. Dispositif (T) selon l'une quelconque des revendications précédentes, **caractérisé en ce que** ledit premier récipient (1) comporte la surface latérale (111), sur laquelle la pluralité de trous traversants (111a, 111b, 111c, 111d) est ménagée pour l'alimentation électrique, liquide et gazeuse du dispositif (T),
la base supérieure ouverte (112) sur laquelle un couvercle (12) est positionné, réalisée en un tissu blanc respirant et dans laquelle un trou central (12a) est réalisé, et
la base inférieure fermée (113).

4. Dispositif (T) selon l'une quelconque des précédentes revendications 2 ou 3, **caractérisé en ce que** ledit premier appât visuel se compose de la couleur noire de la surface latérale (111) dudit premier récipient (1).

5. Dispositif (T) selon l'une quelconque des revendications précédentes, **caractérisé en ce que** ledit appât olfactif supplémentaire est un dispositif (11) pour distribuer du dioxyde de carbone gazeux, qui introduit ledit dioxyde de carbone dans le premier récipient (1) par au moins un trou (111c) de la pluralité de trous traversants (111a, 111b, 111c, 111d).

6. Dispositif (T) selon l'une quelconque des revendications 3 à 5, **caractérisé en ce qu'**un élément collecteur externe noir (14) pour transporter les insectes à l'intérieur du dispositif (T) est positionné sur ladite base supérieure ouverte (212) dudit second récipient (2), l'élément collecteur externe (14) passant à travers ledit trou central (12a) dudit couvercle (12).

7. Dispositif (T) selon la revendication précédente, **caractérisé en ce que** ledit ou lesdits sacs perforés (15) comprennent :
- une première partie (15a) ayant une forme cylindrique, logée à l'intérieur dudit second récipient (2), laquelle première partie (15a) s'étend depuis ladite base supérieure ouverte (212) jusqu'à ladite base inférieure (213) dudit second récipient (2) et
- une seconde partie (15b), ayant une forme de cône tronqué, logée à l'intérieur de ladite première partie (15a), et couplée à ladite première partie (15a) au niveau de ladite base supérieure (212) dudit second récipient (2) ; et
**en ce que** ledit élément collecteur externe (14) fixe ladite première (15a) et ladite seconde (15b) partie à ladite base supérieure ouverte dudit second récipient (2).

8. Dispositif (T) selon l'une quelconque des revendications précédentes, **caractérisé en ce que** ledit dispositif pour générer un flux d'air (16) est un ventilateur alimenté au moyen d'un câble électrique passant à travers au moins un trou (111c) de ladite pluralité de trous traversants (111a, 111b, 111c, 111d).
